# EUROPÄISCHE PATENTSCHRIFT

(11) **EP 3 685 890 B1**
(45) Veröffentlichungstag und Bekanntmachung des Hinweises auf die Patenterteilung: **01.09.2021**
(21) Anmeldenummer: 19153718.2
(22) Anmeldetag: 25.01.2019
(51) Int. Cl.: A63C 5/11, B62B 15/00

(54) **GLEITSPORTGERÄT, DAS MIT OBERKÖRPER UND/ODER ARMEN UND/ODER HÄNDEN UND/ODER FINGERN STEUERBAR IST**
GLIDING SPORTS DEVICE CONTROLLABLE WITH UPPER BODY AND/OR ARMS AND/OR HANDS AND/OR FINGERS
APPAREIL DE SPORT DE GLISSE COMMANDABLE À L'AIDE DE LA PARTIE SUPÉRIEURE DU CORPS ET / OU DES BRAS ET / OU DES MAINS ET / OU DES DOIGTS

(43) Veröffentlichungstag der Anmeldung: 29.07.2020
(73) Patentinhaber: Müller, Kurt, 4800 Zofingen (CH)
(72) Erfinder: Müller, Kurt, 4800 Zofingen (CH)
(74) Vertreter: Keller Schneider Patent- und Markenanwälte AG (Bern)

(56) Entgegenhaltungen:
- EP-A1- 2 762 207
- WO-A1-2005/039975
- GB-A- 2 493 527
- US-A- 1 773 921
- US-B1- 7 097 134

## Beschreibung

Die vorliegende Erfindung betrifft ein Gleitsportgerät, das mit Oberkörper und/oder Armen und/oder Händen und/oder Fingern steuerbar ist.

Ähnliche Gleit- oder Flugsportgeräte kommen beispielsweise im Berggleitsport oder Wassergleitsport zum Einsatz und dienen dazu, das Gewicht eines Benutzers zu verringern und diesem ein Gefühl des Gleitens oder Fliegens zu vermitteln. Hierzu ist vorgesehen, dass sich der Benutzer auf einer Unterlage, beispielsweise einer (geneigten) Bodenfläche oder einer Wasseroberfläche, befindet und sich beispielsweise vorwärts bewegt, und diese Vorwärtsbewegung mittels des Gleitsportgeräts zur Auftriebsgewinnung genutzt wird. Die Auftriebskraft kann dabei so groß sein, dass der Benutzer zeitweise von der Unterlage abhebt, z. B. in Form von Sprüngen, und/oder schwebt. Der Benutzer kann jedoch auch in ständigem Kontakt mit der Unterlage sein. Allgemein wird dem Benutzer dadurch bereits bei relativ niedrigen Geschwindigkeiten ein Auftrieb und ein Gefühl des Fliegens vermittelt. Die (Vorwärts-) Bewegung kann beispielsweise durch Ski- oder Snowboardfahren, Wasserskifahren, Hinunterrennen von Hängen, insbesondere bei Gegenwind, oder in einem Windkanal etc. erzielt werden.

Die Auftriebswirkung ist unter anderem abhängig von der Fläche des Gleitsportgeräts bzw. Flügels, der Geschwindigkeit des Benutzers und dem Anstellwinkel des Gleitsportgeräts. Als Anstellwinkel wird der Winkel verstanden, der zwischen der Richtung der anströmenden Luft und der Profilsehne des Gleitsportgeräts gebildet wird.

Aus der WO 03/106262 A1 ist ein flexibler Flügel bekannt, der eine Vielzahl von sich in Überströmungsrichtung erstreckenden und durch Zwischenwände voneinander getrennte Kammern umfasst. Der Flügel wird durch die seitwärts gehaltenen Arme eines Benutzers, sowie durch das Einströmen von Luft in die Kammern entfaltet.

Aus der EP 2 762 207 A1 ist ein Flügel bekannt, beispielsweise ebenfalls aus luftgefüllten Kammern, dessen Vorderkante an den Armen und Schultern eines Benutzers befestigt ist. Der Anstellwinkel des Flügels ist steuerbar, indem der Benutzer die Hinterkante des Flügels kippt, beispielsweise mittels eines Skistocks.

Bei diesen Vorrichtungen kann aber das Ur-Gefühl des «Gleitens wie ein Vogel» nicht authentisch vermittelt werden, weil diese Vorrichtungen im allgemeinen viel zu klein sind, um bei noch ungefährlichen Geschwindigkeiten genügend Auftrieb zu erzeugen, und/oder weil sie zu wenig segmentiert sind, um gesteuert werden zu können wie ein Vogelflügel, und/oder weil sie zu starr sind, um die Auftriebswirkung auf die einzelnen Gliedmassen des Menschen zu übertragen wie beim Vogel, und/oder weil sie zur Steuerung Hilfsmittel (z.B. Skistöcke, Verbindungsleinen etc.) benötigen, die der Vogel nicht hat. Diese Abweichungen führen zu einer völlig anderen Steuerungsweise dieser Flügel als der Vogel-Flügel und vermitteln deshalb kein echtes Vogel-Fluggefühl.

Damit eine Tragfläche als Sportgerät den Traum vom Fliegen vermitteln kann und eine Marktchance hat, muss sie die folgenden Kriterien erfüllen:
1. Sie muss genügend gross sein und damit genügend Auftrieb erzeugen, um dem Menschen bei noch ungefährlichen Geschwindigkeiten das Gefühl des Schwebens zu verleihen,
2. sie muss leicht sein,
3. sie muss stabil sein,
4. sie muss leicht und direkt steuerbar sein,
5. sie muss sicher sein, um Verletzungen zu verhindern,
6. sie muss eine optimale aerodynamische Form haben und trotzdem zusammenlegbar sein (faltbar, klappbar), um den Gleitsportler und die ihn umgebenden Menschen beim Transport (z.B. bei der Bergfahrt) nicht zu behindern,
7. sie muss finanziell erschwinglich sein.

Die notwendige Grösse einer Tragfläche, um schon bei ungefährlichen Relativ-Geschwindigkeiten zur Luft von 60 km/h (z.B. Gegenwind von 20 km/h und Fahrgeschwindigkeit von 40 km/h) einen spürbaren Auftrieb von rund der Hälfte des Körpergewichtes eines 80 Kg schweren Gleitsportlers zu erzeugen, liegt bei wenig mehr als 3 m². Da der Auftrieb eines Flügels in erster Approximation einerseits mit dem Quadrat der Geschwindigkeit und anderseits linear mit der Flügelfläche zunimmt, kann diese Grösse abgeleitet werden aus den verfügbaren Daten wie Spannweite, Flügelfläche, Gewicht, Fluggeschwindigkeit und Gleitzahl von verschiedenen Tieren wie Flughund, Steinadler, Bartgeier, Höckerschwan, Kondor, Albatros etc., oder von Fluggeräten wie Wingsuit von BASE-Jumpern, Gleitschirm von Speed-Flyern, Delta-Gleiter, Gleitschirm, Otto von Lilienthal-Gleiter etc.

Aus den erwähnten physikalischen Formeln folgt auch, dass ein Gleitsportler mit einem Gewicht von 80 kg mit einer Tragfläche von wenig mehr als 3 m² auf einer steilen Piste ab einer Neigung von 20 Grad bei einer Relativgeschwindigkeit zur Luft von rund 85 km/h abheben kann, ebenso auch bei schneller Erhöhung des Anstellwinkels der Tragfläche.

Die bisher bekannten Vorrichtungen erfüllen die oben angeführten 7 Kriterien nicht.

Die Aufgabe der vorliegenden Erfindung besteht darin, ein alternatives bzw. verbessertes Gleitsportgerät bereitzustellen, das insbesondere direkt, d. h. ohne Hilfsmittel wie Skistöcke, Steuerleinen etc., und auf einfache Art und Weise, vorzugsweise mit Oberkörper und/oder Armen und/oder Händen und/oder Fingern steuerbar ist.

Diese Aufgabe wird gelöst durch ein Gleitsportgerät gemäß Anspruch 1. Weiterbildungen der Erfindung sind jeweils in den Unteransprüchen angegeben.

Das erfindungsgemäße Gleitsportgerät ist vorzugsweise mit Oberkörper und/oder Armen und/oder Händen und/oder Fingern steuerbar und erstreckt sich in einer bestimmungsgemäßen Überströmungsrichtung von einer Vorderkante zu einer Hinterkante wenn es an einem Benutzer befestigt ist. Das Gleitsportgerät umfasst zumindest zwei Schulterrippen, die sich im Wesentlichen von der Vorderkante zur Hinterkante erstrecken, und wobei jede der Schulterrippen fest mit einem Oberarm des Benutzers verbindbar ist, und so mit dem Oberarm verbindbar ist, dass sie um die Achse des Oberarms drehbar ist, sowie zwei Handrippen, die sich im Wesentlichen von der Vorderkante zur Hinterkante erstrecken und wobei jede der Handrippen fest mit einer Hand des Benutzers verbindbar ist. Weiter umfasst das Gleitsportgerät zumindest eine Rückentragfläche, die zwischen den zwei Schulterrippen gebildet ist, und zwei Armtragflächen, die jeweils zwischen einer Schulterrippe und einer Handrippe gebildet sind. Vorzugsweise sind die Schulterrippen und Handrippen (und somit auch die Rückentragfläche und die Armtragflächen) symmetrisch zu einer Körpermittellängsachse, beispielsweise entlang der Wirbelsäule, des Benutzers angeordnet.

Allgemein wird unter dem Begriff "Gleitsportgerät" (im Folgenden auch als "Flügel" bezeichnet) eine Vorrichtung verstanden, die bei Bewegung des Benutzers einen Auftrieb erzeugt und so zumindest bei ausreichender Geschwindigkeit dazu dient, das Gewicht des Benutzers zu verringern und dem Benutzer das Gefühl des Gleitens und/oder Schwebens zu vermitteln. Der Begriff "Gleitsportgerät" oder "Flügel" setzt nicht zwingend ein Fliegen im herkömmlichen Sinn, d. h. das Abheben des Benutzers von der Unterlage, voraus. Der Benutzer wird entsprechend auch als "Gleitsportler" bezeichnet.

Die bestimmungsgemäße Überströmungsrichtung bezeichnet die Richtung, in der die Luft das Gleitsportgerät bzw. den Flügel überstreicht, wenn sich der Benutzer bewegt, also in der Regel (mit Ausnahme eventueller Bodenwinde) die der Bewegungsrichtung des Benutzers entgegengesetzte Richtung. Die Vorderkante des Flügels muss nicht durchgehend über die gesamte Breite (d. h. quer zur bestimmungsgemäßen Überströmungsrichtung) des Flügels ausgebildet sein. Sie kann beispielsweise im Bereich des Benutzers unterbrochen sein, indem die Vorderkante des Flügels zumindest teilweise um den Benutzer, insbesondere hinter dessen Rücken, entlanggeführt wird. Die Hinterkante des Flügels ist vorzugsweise durchgehend über die gesamte Breite des Flügels ausgebildet.

Dass die Handrippen, Schulterrippen, sowie weiter unten angeführte weitere Rippen des Flügels fest mit der Hand bzw. dem Oberarm (allgemein: dem Arm des Benutzers) verbindbar bzw. verbunden sind, meint, dass die Position und Stellung, insbesondere Winkelstellung, der Rippen in Bezug auf die Hand und den Unterarm des Benutzers (zumindest während der Benutzung des Gleitsportgeräts) festgelegt und nicht variierbar ist. Die Schulterrippe kann jedoch um die Oberarmachse gedreht werden. Dies schließt ein Verrutschen, Verkippen etc. der Rippen in Bezug auf den Arm aus. Dies ermöglicht beispielsweise eine gute Kraftübertragung von der Hand und dem Unterarm des Benutzers auf den Flügel und somit eine direkte, d. h. insbesondere ohne weitere Hilfsmittel wie z. B. Steuerleinen und/oder Skistöcke, Steuerbarkeit des Flügels. Insbesondere ist es dadurch möglich, die Anstellwinkel der Tragflächen durch Kippen bzw. Neigen der entsprechenden Rippen zu steuern. Der Anstellwinkel der Schulterrippe wird durch Vorlage gesteuert. Dadurch kann auch eine gute Kraftübertragung von dem Flügel auf den Benutzer ermöglicht werden, was ein Gefühl des "Gleitens wie ein Vogel" ergibt.

Allgemein kann durch diese segmentierte Bauart des Flügels (als Segmente werden die verschiedenen Tragflächen verstanden, d. h. die Rücken- und Armtragflächen, sowie weiter unten angeführte weitere Tragflächen) eine gute Steuerbarkeit des Flügels ermöglicht werden. Da die Handrippe mit der Hand verbindbar bzw. im Betrieb verbunden ist und die Schulterrippe mit der Armaufnahme-Halbschale (siehe unten), sind diese durch Handgelenk und Ellbogengelenk relativ zueinander bewegbar, was die Einstellbarkeit der Tragflächen-Segmente zueinander und somit die Steuerbarkeit des Flügels erhöhen kann.

Dadurch ist ein Flügel bereitgestellt, der eine leichte, stabile, direkt steuerbare und sichere Tragfläche von ca. 2,8 m² bis ca. 4,5 m² aufweist, die mit Oberkörper, Schultern, Armen, Ellbogen, Händen und Fingern so gesteuert werden kann, dass der Auftrieb auf die einzelnen Gliedmaßen des Menschen übertragen wird, was dem Benutzer das Gefühl des "Gleitens wie ein Vogel" verleiht. Dank der Dimensionierung verleiht er das Erlebnis des Gleitens bereits bei ungefährlichen Geschwindigkeiten. Trotz der notwendigen Größe ist er so faltbar, dass er den Gleitsportler und andere Menschen beim Transport im Auto, in Seilbahnkabinen, Bergbahnen, Gondelbahnen, auf Sesselliften, Skiliften etc. nicht behindert.

Vorzugsweise sind die Tragflächen aus einem flexiblen Material, wie beispielsweise einem Tuch und/oder einer Folie gebildet. Dies ermöglicht es beispielsweise, den Flügel auf einfache Art zusammenzulegen bzw. zu falten, insbesondere zu Transportzwecken, und stellt beispielsweise ein leichtgewichtiges Material für den Flügel bereit.
Die Rippen können in Leichtbauweise, starr, d. h. nicht biegbar oder flexibel, beispielsweise aus einem Metall und/oder Carbon, gefertigt sein. Dadurch kann eine gute Kraftübertragung zwischen Flügel und Benutzer erzielt werden. Alternativ können die Rippen flexibel ausgebildet sein, beispielsweise aus demselben Material wie die Tragflächen, was das Gewicht des Flügels weiter reduzieren kann.

Das erfindungsgemäße Gleitsportgerät umfasst weiter zwei Armrippen, die sich im Wesentlichen von der Vorderkante zur Hinterkante erstrecken und wobei jede der Armrippen fest mit einem Unterarm des Benutzers verbindbar ist, so dass jede der zwei Armtragflächen in eine Oberarmtragfläche, die zwischen der jeweiligen Schulterrippe und Armrippe gebildet ist, und in eine Unterarmtragfläche, die zwischen der jeweiligen Armrippe und Handrippe gebildet ist, unterteilt ist. Vorzugsweise ist die Anordnung der Armrippen und somit die Form der Oberarm- und Unterarmtragfläche ebenfalls symmetrisch zueinander.

Durch die Unterteilung der Armtragflächen in Oberarm- und Unterarmtragflächen und insbesondere dadurch, dass die Schulter-, Arm- und Handrippen durch die Gelenke des Benutzers (Ellbogengelenk und Handgelenk) relativ zueinander bewegbar sind, kann die Steuerbarkeit des Flügels weiter erhöht werden bzw. das Gefühl des Gleitens weiter verbessert werden.
Vorzugsweise umfasst das Gleitsportgerät weiter zwei Unterarmverlängerungen, die jeweils fest mit einem Unterarm des Benutzers verbindbar sind und sich im Wesentlichen in Verlängerung des Unterarms erstrecken, insbesondere wenn das Gleitsportgerät an dem Benutzer befestigt ist, und wobei jeweils zumindest eine Fingertragfläche zwischen einer Unterarmverlängerung und der jeweiligen Handrippe gebildet ist. Weiter bevorzugt umfasst das Gleitsportgerät weiter zumindest eine, noch weiter bevorzugt acht, Fingerrippen, die jeweils fest mit einem Finger *des* Benutzers verbindbar ist/sind und sich im Wesentlichen in Verlängerung des jeweiligen Fingers erstreckt/erstrecken, insbesondere wenn das Gleitsportgerät an dem Benutzer befestigt ist, und wobei zwischen der jeweiligen Unterarmverlängerung, der Handrippe und der bzw. den Fingerrippe(n) eine Mehrzahl von Fingertragflächen gebildet ist.

Es sei an dieser Stelle bemerkt, dass der oben und im Folgenden verwendete allgemeine Begriff "Rippe(n)" nicht nur die Schulter-, Arm-, Hand und Fingerrippen meint, sondern zusätzlich auch die Unterarmverlängerungen mit einschließt.

Durch das Bereitstellen der Fingertragflächen kann die Gesamtfläche des Flügels vergrößert werden, was die Auftriebskraft erhöht. Zudem ermöglicht die feste Verbindung der Fingerrippen mit den Fingern des Benutzers eine direkte Steuerbarkeit, insbesondere des Anstellwinkels, der Fingertragflächen. Die Fingertragflächen entsprechen vorzugsweise den Flughäuten von Fledermäusen, Flughunden oder Flugsauriern und/oder sind einlagig ausgebildet.

Weiter bevorzugt ist zumindest eine Unterarmverlängerung zweiteilig ausgebildet, wobei ein erster Abschnitt der Unterarmverlängerung fest mit dem Unterarm verbindbar ist und ein zweiter Abschnitt der Unterarmverlängerung in Bezug auf den ersten Abschnitt bewegbar ist, insbesondere so, dass dieser Abschnitt und die Fingerrippen bzw. Fingertragflächen in Richtung der Handrippe des Benutzers klappbar sind. Die zweiten Abschnitte der Unterarmverlängerung können dabei beispielsweise über ein verriegelbares Gelenk miteinander verbunden sein. Durch Umklappen dieser Abschnitte und der Fingertragflächen können diese beispielsweise an die Handrippen angelegt und dort befestigt werden. Dadurch wird die Flügelfläche verringert, was beispielsweise zum Transport (in Bergbahnen, Sesselliften, Skiliften etc.) oder auch zu Übungszwecken und/oder bei starkem Gegenwind und/oder zu starkem Auftrieb, insbesondere zu Sicherheitszwecken, vorteilhaft sein kann.

Alternativ oder zusätzlich weisen die Unterarmverlängerungen an ihren den Armen abgewandten Enden nach oben gebogene Abschnitte auf. Diese sogenannten Winglets dienen der Verminderung des Luftwiderstandes des Flügels, durch eine Vergrößerung der Radien der Randwirbel und dadurch einer Verkleinerung der Luftgeschwindigkeit in den Randwirbeln. (Der Energieverlust ist proportional zum Quadrat der Geschwindigkeit der Luft in den Randwirbeln.)

Das erfindungsgemäße Gleitsportgerät umfasst weiter ein Aufnahmeelement zum zumindest teilweisen Aufnehmen eines Arms des Benutzers, wobei eine Schulterrippe und/oder eine Armrippe und/oder eine Unterarmverlängerung fest an dem Aufnahmeelement befestigt ist bzw. sind. Das Aufnahmeelement ist aus einem Oberarmaufnahmeelement zur Aufnahme des Oberarms und einem Unterarmaufnahmeelement zur Aufnahme des Unterarms gebildet, die mittels einer flexiblen Verbindung miteinander verbunden sind und zusammen ein torsionsstabiles Aufnahmeelement bilden und wobei die Schulterrippe an dem Oberarmaufnahmeelement vorgesehen ist und die Armrippe an dem Unterarmaufnahmeelement.

Die flexible Verbindung kann beispielsweise ein Faltenbalg im Bereich des Ellenbogens sein, der ein Beugen und Strecken des Ellbogengelenks erlaubt. Der Begriff "torsionsstabil" meint dabei, dass das Oberarm- und Unterarmaufnahmeelement, sowie die flexible Verbindung nicht gegeneinander verdrehbar sind. Durch eine derartige Verdrehsicherung wird beispielsweise ermöglicht, dass eine Veränderung des Anstellwinkels der Schulterrippe (durch Vorlage) auf die Armrippe übertragen werden kann, und auch umgekehrt. Insgesamt kann das Aufnahmeelement dem Flügel eine hohe Festigkeit verleihen und so eine gute Kraftübertragung zwischen Benutzer und Flügel ermöglichen.

Vorzugsweise umfasst das Gleitsportgerät weiter Rückenverbindungsmittel, die dazu ausgebildet sind, die Rückentragfläche und/oder Schulterrippe, insbesondere in einem Bereich nahe der Hinterkante der Rückentragfläche bzw. Schulterrippe, mit dem Rücken des Benutzers, insbesondere in einem Bereich des unteren Rückens, zu verbinden, wobei die Rückenverbindungsmittel weiter bevorzugt längenverstellbar ausgebildet sind.

Weiter bevorzugt sind die Rückenverbindungsmittel dazu ausgebildet, die Rückentragfläche mit der gesamten Länge des Rückens vom Hals bis zum Steissbein zu verbinden bzw. die Schulterrippe mit den Lenden zu verbinden. Derartige Rückenverbindungsmittel können beispielsweise eine oder mehrere Leinen und/oder ein Tuch oder eine Folie sein. Die Rückenverbindungsmittel ermöglichen beispielsweise eine Steuerung des Anstellwinkels der Rückentragfläche und/oder der Schulterrippendurch Neigen des Oberkörpers (Vorlage). Zudem können die Rückenverbindungsmittel den Anstellwinkel begrenzen.

Vorzugsweise ist an der Hinterkante zumindest zwischen zwei der Rippen ein festes Element, weiter bevorzugt ein stab- oder rohrförmiges Element, vorgesehen. Das feste Element zwischen den Enden der Rippen kann beispielsweise als distanzgebendes Element zwischen den jeweiligen Rippen dienen, d. h. zum Spannen der entsprechenden Tragfläche, und kann z. B. als Carbon-Röhrchen ausgebildet sein.

Vorzugsweise umfasst das Gleitsportgerät weiter Schulterrippenverbindungsmittel, die zumindest eine Schulterrippe im Bereich der Hinterkante mit einer Armrippe nahe des Arms des Benutzers verbinden, insbesondere wenn das Gleitsportgerät an dem Benutzer befestigt ist, und/oder Armrippenverbindungsmittel, die zumindest eine Armrippe im Bereich der Hinterkante mit einer Handrippe nahe der Hand des Benutzers verbinden, insbesondere wenn das Gleitsportgerät an dem Benutzer befestigt ist. Die Schulterrippenverbindungsmittel können beispielsweise dem Spannen der Rückentragfläche dienen, die Armrippenverbindungsmittel können beispielsweise dem Spannen der Oberarmtragflächen dienen.

Vorzugsweise umfasst das Gleitsportgerät weiter zumindest ein Sicherheitsgelenk an einer Schulterrippe und/oder einer Armrippe und/oder einer Handrippe und/oder einer Unterarmverlängerung und/oder einer Fingerrippe, wobei das Sicherheitsgelenk dazu ausgebildet ist, bei Überlastung des jeweiligen Elements auszulösen. Mit einem solchen Sicherheitsgelenk können beispielsweise Verletzungen des Benutzers, insbesondere infolge eines Sturzes, verhindert oder zumindest verringert werden.

Vorzugsweise umfasst das Gleitsportgerät weiter Handaufnahmemittel zur Aufnahme der Hände des Benutzers, wobei die Handrippen fest an den Handaufnahmemitteln befestigt sind. Diese können beispielsweise als Handschuhe ausgebildet sein. Vorzugsweise bleibt der Daumen dabei frei, um diesen zum Greifen benutzen zu können. Durch derartige Handaufnahmemittel können die Handrippen beispielsweise mit den Händen des Benutzers fest verbunden werden.

Vorzugsweise sind die Schulterrippen und/oder die Armrippen und/oder die Handrippen in vertikaler Richtung steif und in horizontaler Richtung flexibel, um die Verletzungsgefahr des Gleitsportlers bei einem Sturz weiter zu vermindern.

Vorzugsweise weisen die Rückentragfläche und die Armtragflächen bzw. die Oberarmtragflächen und Unterarmtragflächen jeweils eine Oberseite und eine von der Oberseite beabstandete Unterseite auf, wobei die jeweiligen Rippen weiter bevorzugt als distanzgebende Elemente zwischen der Oberseite und der Unterseite wirken und/oder wobei das Gleitsportgerät vorzugsweise weiter Lufteinlassöffnungen umfasst zum Einlassen von Luft in den zwischen der Oberseite und der Unterseite gebildeten Zwischenraum.

Weiter bevorzugt bilden die Oberseite und die Unterseite mit Ausnahme der Lufteinlassöffnungen einen im Wesentlichen vollständig geschlossenen Raum, der seitlich durch die Handrippen begrenzt ist. Das Flügelprofil, d. h. eine Schnittfläche entlang der bestimmungsgemäßen Überströmungsrichtung, ist dabei vorzugsweise durch die Rippen festgelegt und weist weiter beispielsweise die Form von Tragflächen eines Flugzeugs oder von Vogelflügeln auf. Zwischen den jeweiligen Rippen sind vorzugsweise Kammern gebildet, wobei ein Luftüberdruck in den Kammern dem Spannen der Tragflächen dient. Vorzugsweise sind die Rippen mit Ausnehmungen (Löchern) durchsetzt, um das Ausbreiten des Luftüberdrucks zwischen den Kammern zu ermöglichen.

Weiter bevorzugt sind die Schulterrippen, die Armrippen und/oder die Handrippen jeweils aus einem flexiblen Material gebildet. Dadurch kann der Flügel beispielsweise noch kleiner gefaltet werden, beispielsweise zu Transportzwecken.

Vorzugsweise ist oberhalb der aus Rückentragfläche und Armtragflächen bzw. Oberarmtragflächen und Unterarmtragflächen gebildeten Haupttragfläche zumindest eine weitere, vorzugsweise flexible, Tragfläche vorgesehen, die mit der Haupttragfläche verbunden ist, vorzugsweise so, dass zwischen der Haupttragfläche und der weiteren Tragfläche sich im Wesentlichen in der bestimmungsgemäßen Überströmungsrichtung erstreckende Luftkammern gebildet sind. Durch diesen Doppeldeckereffekt kann beispielsweise ein Strömungsabriss verzögert werden. Zudem wird den Auftrieb des Flügels verbessert.

Weitere Merkmale und Zweckmäßigkeiten der Erfindung ergeben sich aus der Beschreibung von Ausführungsbeispielen anhand der beigefügten Zeichnungen.

### Beschreibung der Figuren

- Fig. 1: zeigt eine schematische Ansicht eines an einem Benutzer befestigten Flügels gemäß einer Ausführungsform der vorliegenden Erfindung,
- Fig. 2: zeigt einen den rechten Arm des Benutzers umfassenden Ausschnitt des in Fig. 1 gezeigten Flügels,
- Fig. 3: zeigt eine Ansicht des Benutzers von vorne mit einem Flügel gemäß Weiterbildungen der Erfindung.

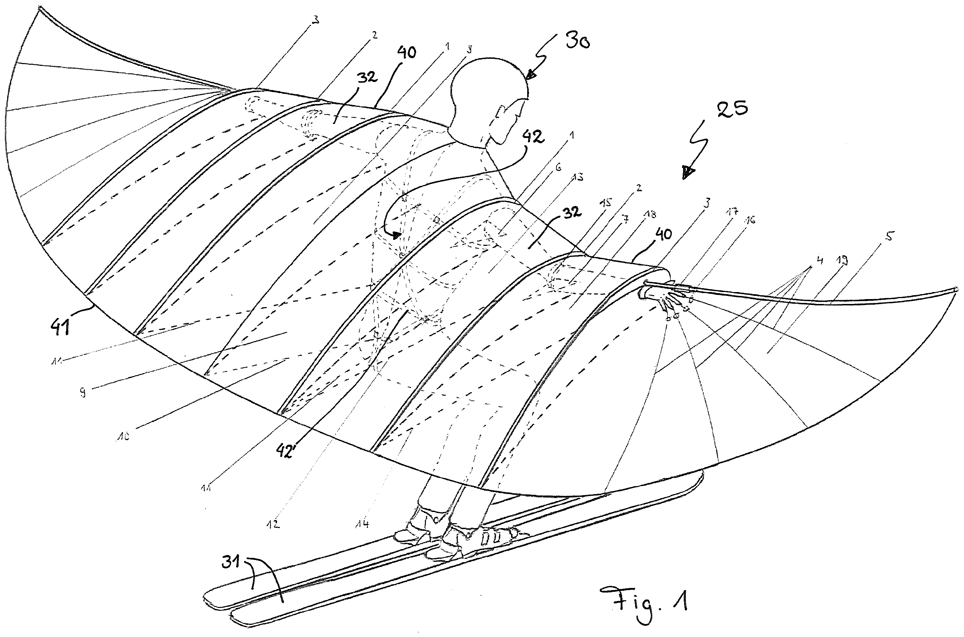

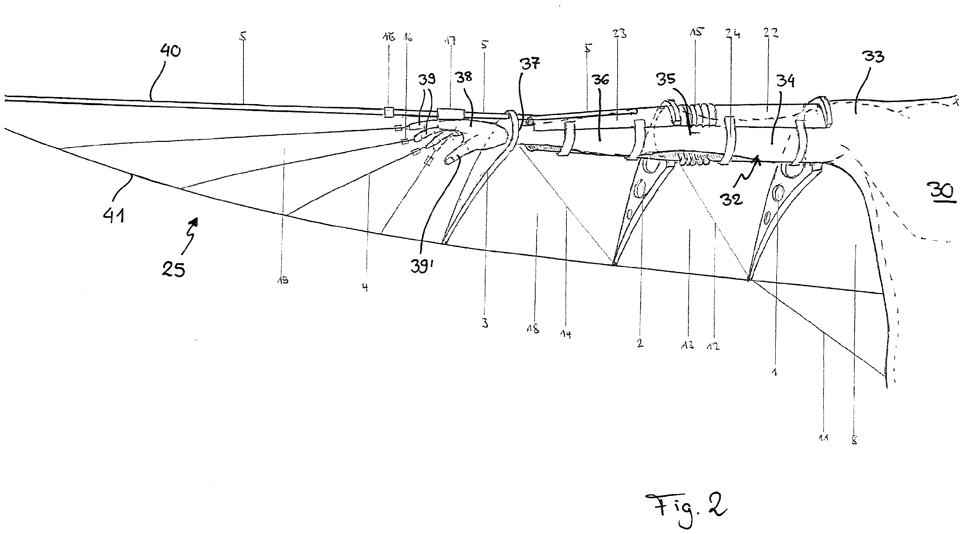

Fig. 1 bis 3 zeigen einen Gleitsportler bzw. Benutzer 30 mit Skiern 31, an dem ein als Flügel 25 ausgebildetes erfindungsgemäßes Gleitsportgerät angebracht ist. In Fig. 2 ist lediglich der rechte Arm des Benutzers 30 und der entsprechende rechte Flügelabschnitt gezeigt, der am linken Arm befestigte linke Flügelabschnitt ist analog, d. h. spiegelsymmetrisch zum rechten Flügelabschnitt, ausgebildet.

### Aufbau

Der Flügel wird vorzugsweise in gemischter Bauweise (starr und flexibel) hergestellt, damit er stabil ist und trotzdem gefaltet werden kann.

Der Flügel 25 erstreckt sich in einer bestimmungsgemäßen Überströmungsrichtung von einer Vorderkante 40, der Anströmungskante, zu einer Hinterkante 41. Der Flügel 25 ist aus einer zentral vorgesehenen Rückentragfläche 8, und symmetrisch dazu, je zweier Oberarmtragflächen 13, je zwei Unterarmtragflächen 18 und je fünf Fingertragflächen 19 gebildet. Jede der Tragflächen 8, 13, 18, 19 ist durch zwei Rippen (Schulterrippen 1, Armrippen 2, Handrippen 3, Fingerrippen 4, Unterarmverlängerung 5) begrenzt bzw. ist jeweils zwischen zwei dieser Rippen gebildet. Bei der in Fig. 1 bis 3 gezeigten Ausführungsform ist der Flügel bzw. die Tragflächen einlagig, d. h. als Flughaut, ausgebildet, indem Tuch oder Folie an den Rippen befestigt und zwischen diesen gespannt ist. Vorzugsweise ist das Tuch bzw. die Folie an den Oberseiten der Rippen befestigt, so dass die Rippen nach oben hin von dem Tuch bzw. der Folie bedeckt sind (s. Fig. 1) und die Rippen an der Unterseite des Flügels sichtbar sind (s. Fig. 2).

Das Tuch bzw. die Folie ist vorzugsweise flexibel, vorzugsweise aus demselben Material gefertigt wie Gleitschirme, Wingsuits etc., während die Rippen vorzugsweise starr sind und mit den Armen 32 des Benutzers 30 fest verbunden sind.

Wie in Fig. 2 gezeigt, ist der Arm 32 des Benutzers 30 in oder an einem Aufnahmeelement befestigt, welches aus einer starren Oberarmhalbschale 22 als Oberarmaufnahmeelement, einer starren Unterarmhalbschale 23 als Unterarmaufnahmeelement und einer flexible Verbindung 15 als Ellenbogenverbindung, die die Oberarmhalbschale 22 und die Unterarmhalbschale 23 miteinander verbindet, gebildet ist. Die Oberarm- und Unterarmhalbschalen 22, 23 können beispielsweise aus Carbon gebildet sein. Die Oberarmhalbschale 22 umschließt den Oberarm 34 zumindest teilweise, vorzugsweise über dessen gesamte Länge und in Umfangsrichtung des Oberarms 34 zumindest teilweise, insbesondere oben und rückseitig, d. h. an dessen der Hinterkante 41 und Oberseite des Flügels 25 zugewandten Seite. Analog umschließt die Unterarmhalbschale 23 den Unterarm 36 zumindest teilweise, vorzugsweise über dessen gesamte Länge und in Umfangsrichtung des Unterarms zumindest teilweise, insbesondere oben und rückseitig, d. h. an dessen der Hinterkante 41 und Oberseite des Flügels 25 zugewandten Seite. Die Oberarmhalbschale 22 und die Unterarmhalbschale 23 sind mittels lösbarer Verschlussmittel 24, wie z.B. Schnallen, Riemen, Klettverschlüssen etc., fest am Oberarm 34 bzw. Unterarm 36 des Benutzers befestigt. Im Bereich des Ellenbogens 35 ist die flexible Verbindung 15 (Ellenbogenverbindung), beispielsweise in Form eines torsionsstabilen Faltenbalgs, vorgesehen, um die Unterarmhalbschale 23 und die Oberarmhalbschale 22 miteinander zu verbinden und zugleich eine relative Bewegung der Halbschalen zueinander, insbesondere eine Beugung des Ellenbogens 35, zu erlauben, jedoch eine Torsion (d. h. ein Drehen entlang der Armlängsachse) der Halbschalen zueinander und/oder relativ zum Arm 32 des Benutzers 30 zu verhindern.

In Fig. 2 sind Halbschalen 22, 23 als Aufnahmeelement für den Arm gezeigt, die den Arm (Oberarm bzw. Unterarm) nur teilweise umschließen. Das Aufnahmeelement bzw. das Oberarm- und/oder Unterarmaufnahmeelement kann den Oberarm bzw. Unterarm in Umfangsrichtung auch vollständig umschließen und beispielsweise als starrer Ärmel ausgebildet sein.

Die Schulterrippe 1 ist im Bereich der Schulter 33 vorgesehen und mit der Oberarmhalbschale 22 verbunden bzw. an dieser so befestigt, dass die Schulterrippe um die Achse des Oberarms drehbar ist. Die Armrippe 2 ist im Bereich des Ellenbogens 35 vorgesehen und fest mit der Unterarmhalbschale 23 verbunden bzw. fest an dieser befestigt, so dass die Position und (Winkel-) Stellung der Armrippe 2 in Bezug auf die Ebene, die zwischen Oberarm 35 und Unterarm 36 gebildet wird, festgelegt ist. Die Oberarm- und Unterarmhalbschalen 22, 23 können dabei so mit der Schulterrippe 1 bzw. Armrippe 2 verbunden sein, dass die Oberarm- und Unterarmhalbschalen 22, 23 im Bereich der Vorderkante 40 des Flügels 25 vorgesehen sind (wie in Fig. 1, 2 gezeigt) und/oder im Bereich des Auftriebsmittelpunkts des Flügels 25 und/oder in einem Bereich zwischen der Vorderkante 40 und dem Auftriebsmittelpunkts des Flügels 25 (in den Figuren nicht gezeigt).

Des Weiteren umfasst der Flügel 25 eine Handrippe 3, die im Bereich des Handgelenks 37 vorgesehen ist und fest mit der Hand 38, beispielsweise der Handfläche, des Benutzers 30 verbunden bzw. fest an dieser befestigt ist, so dass die Position und (Winkel-) Stellung der Handrippe 3 in Bezug auf die Hand 38 festgelegt ist. Vorzugsweise ist hierzu die Handrippe 3 fest an einem Handaufnahmemittel (nicht gezeigt) zur Aufnahme der Hand 38 des Benutzers 30, beispielsweise einem Handschuh, befestigt.

Die Schulterrippe 1, Armrippe 2 und Handrippe 3 erstrecken sich dabei im Wesentlichen vom Arm 32 des Benutzers 30 in Richtung der Hinterkante 41 des Flügels, vorzugsweise in einem Winkel von im Wesentlichen 90° zum Arm 32 bzw. zu dem jeweiligen Armsegment (Oberarm 34, Unterarm 36 bzw. Hand 38). Die Schulterrippe 1, Armrippe 2 und Handrippe 3 weisen vorzugsweise die Form von Tragflächen eines Flugzeugs oder von Vogelflügeln auf. Die Schulterrippe 1, Armrippe 2 und Handrippe 3 sind vorzugsweise in Leichtbauweise, z. B. aus Carbon, hergestellt und sind vorzugsweise vertikal steif und horizontal flexibel, um Verletzungen zu verhindern. Vorzugsweise sind sie mit Sicherheitsgelenken (nicht gezeigt) nahe am Arm 32 ausgestattet, die z. B. bei einem Sturz ausgelöst werden, um Verletzungen zu verhindern. Des Weiteren sind die Schulterrippe 1 und Armrippe 2 vorzugsweise von Ausnehmungen bzw. Löchern durchsetzt.

Die Unterarmverlängerung 5 ist ebenfalls eine Rippe, welche als Verlängerung des Unterarms 36 vorgesehen und fest mit der Unterarmhalbschale 23 verbunden bzw. fest an dieser befestigt ist, so dass die Position und (Winkel-)Stellung der Unterarmverlängerung 5 in Bezug auf den Unterarm 36 festgelegt ist. Die Unterarmverlängerung 5 kann beispielsweise wie in Fig. 2 gezeigt an der Oberseite der Unterarmhalbschale 23 befestigt und durch die Handrippe 3 hindurchgeführt sein.

Die vier Fingerrippen 4 sind jeweils in Verlängerung eines Fingers 39 (Zeige-, Mittel-, Ring- und kleiner Finger) vorgesehen und fest mit dem jeweiligen Finger verbunden bzw. fest an diesem befestigt, beispielsweise mittels dem oben erwähnten Handaufnahmemittel zur Aufnahme der Hand 38 (z. B. ein Handschuh) und/oder Fingerhülsen. Somit ist die Position und (Winkel-)Stellung der Fingerrippen 4 in Bezug auf den jeweiligen Finger 39 festgelegt. Der Daumen 39' ist vorzugsweise frei, d. h. nicht mit einer Fingerrippe verbunden.

Die Unterarmverlängerung 5 und Fingerrippen 4 können beispielsweise als dünne Stäbe und/oder Röhrchen ausgeführt sein und z. B. aus Carbon gebildet sein. Auch die Unterarmverlängerung 5 und/oder die Fingerrippen 4 sind vorzugsweise mit Sicherheitsgelenken 16, z. B. Schnapp-Gelenken, nahe den Fingern 39 bzw. nahe der Hand 38 ausgestattet, die z. B. bei einem Sturz ausgelöst werden, um Verletzungen zu verhindern. Des Weiteren ist die Unterarmverlängerung 5 vorzugsweise zweiteilig ausgebildet, wobei ein erster Abschnitt der Unterarmverlängerung fest mit dem Unterarm 36 bzw. der Unterarmhalbschale 23 verbunden ist und ein zweiter Abschnitt der Unterarmverlängerung 5 im Bereich der Fingertragflächen 19 in Bezug auf den ersten Abschnitt bewegbar ist. Die zwei Abschnitte der Unterarmverlängerung 5 sind beispielsweise über eine klappbare Verbindung 17, z. B. ein verriegelbares Scharnier oder Gelenk, miteinander verbunden, so dass der zweite Abschnitt mit den Fingerrippen 4 bzw. Fingertragflächen 19 an die Handrippe 3 angelegt und dort befestigt werden kann.

Wie oben erwähnt sind an je einem Arm 23 des Benutzers 30 je eine Schulterrippe 1, eine Armrippe 2, eine Handrippe 3, eine Unterarmverlängerung 5 und vier Fingerrippen 4 vorgesehen, vorzugsweise so, dass die jeweiligen rechten und linken Rippen symmetrisch zueinander ausgebildet und angeordnet sind. Die Rückentragfläche 8 ist zwischen den Schulterrippen 1 gebildet, die Oberarmtragflächen 13 sind jeweils zwischen Schulterrippe 1 und Armrippe 2 gebildet, die Unterarmtragflächen 18 sind jeweils zwischen Armrippe 2 und Handrippe 3 gebildet und die Fingertragflächen 19 sind zwischen den Fingerrippen 4 bzw. zwischen Unterarmverlängerung 5 oder Handrippe 3 und nächstliegender Fingerrippe 4 gebildet.

Der Flügel 25 und/oder die Schulterrippen 1 sind mit Rückenverbindungsmitteln 9, 10, 11 mit dem (Ober)-Körper und/oder den Lenden des Gleitsportlers 30, der vorzugsweise ein Körpergurtzeug 42' trägt, wie es z. B. im Kletter-, Gleitschirm- und/oder Fallschirmsport etc. verwendet wird, verbunden. Als Rückenverbindungsmittel ist in Fig. 1 ein Tuch und/oder eine Folie 9 vorgesehen, die die Rückentragfläche 8 vorzugsweise mittig zwischen den Schulterrippen 1 großflächig mit dem Rücken 42 verbindet, vorzugsweise entlang der gesamten Länge des Rückens 42 vom Hals bis zum Steißbein. Alternativ oder zusätzlich ist in Fig. 1 eine Verbindungsleine 10 als Rückenverbindungsmittel vorgesehen, die die Hinterkante 10 ausgehend von der Mitte der Rückentragfläche 8 mit dem unteren Rücken des Benutzers verbindet. Alternativ oder zusätzlich sind in Fig. 1 Verbindungsleinen 11 als Rückenverbindungsmittel vorgesehen, die die Schulterrippen 1 an der Hinterkante 41 mit den Lenden des Benutzers 30 verbinden. Vorzugsweise sind die Verbindungsleinen 10, 11 und/oder das Tuch bzw. Folie 9 längenverstellbar ausgebildet.

Optional sind an der Hinterkante 41 des Flügels 25 zwischen den Rippen 1, 2, 3, 4, 5 feste Elemente, beispielsweise Carbon-Röhrchen, vorgesehen (nicht gezeigt), die jeweils benachbarte Rippen miteinander verbinden.

Optional umfasst der Flügel 25, zum Spannen der Tragflächen, Schulterrippenverbindungsmittel, z. B. Verbindungsleinen 12, die die Schulterrippen 1 im Bereich der Hinterkante 41 mit den Armrippen 2 nahe des Arms 32 bzw. im Bereich des Ellenbogens 35 des Benutzers 30 verbinden und/oder Armrippenverbindungsmittel, z. B. Verbindungsleinen 14, die die Armrippen 2 im Bereich der Hinterkante 41 mit den Handrippen 3 nahe der Hand 38 bzw. im Bereich des Handgelenks 37 des Benutzers 30 verbinden (s. Fig. 1, 2).

Optional umfasst der Flügel 25 feste Verbindungen zwischen den Schulterrippen 1 und den Oberarmhalbschalen 22, in Fig. 1 schematisch durch Dreiecke 6 dargestellt, und/oder feste Verbindungen zwischen den Armrippen 2 und den Unterarmhalbschalen 23, in Fig. 1 schematisch durch Dreiecke 7 dargestellt.

Vorzugsweise ist der Flügel in eine Jacke und/oder einen Overall integriert, die bzw. der insbesondere leicht ausgezogen werden kann. Die Jacke bzw. der Overall ist weiter bevorzugt eng geschnitten bzw. eng am Körper anliegend ausgebildet, um den Luftwiderstand zu minimieren.

Der Flügel 25 kann beispielsweise eine Gesamtoberfläche zwischen ca. 2,8 m² und ca. 4,5 m² aufweisen. Die Länge des Flügels (d. h. die Distanz zwischen Vorderkante 40 und Hinterkante 41) im Ruhezustand reicht vorzugsweise bis zu den Kniekehlen oder Waden des Benutzers. Der Benutzer kann dadurch z. B. in Sesselbahnen bequem auf die Rückentragfläche 8 sitzen.

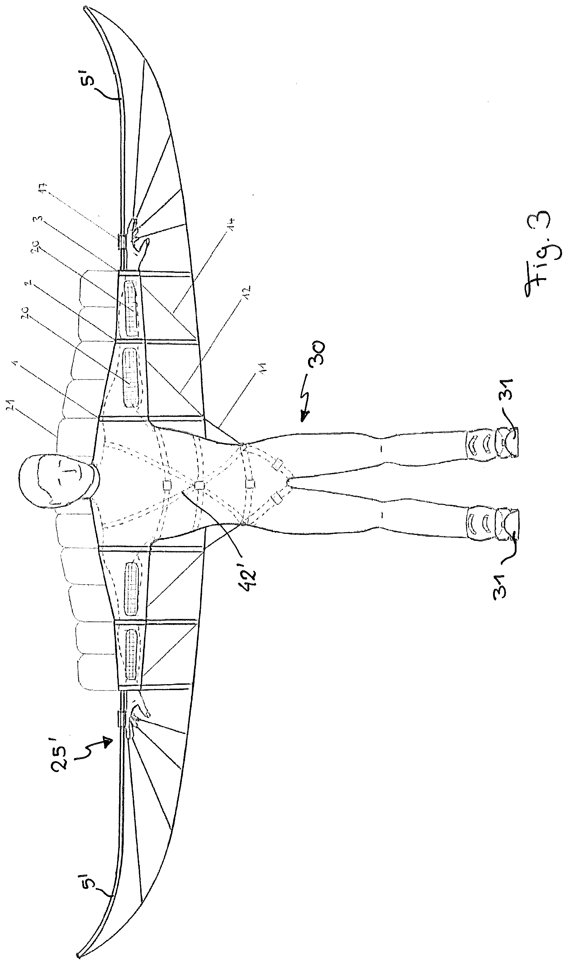

Im Folgenden werden mit Bezug auf Fig. 3 Weiterbildungen der Erfindung beschrieben. Der oben in Bezug auf Fig. 1 bis 3 beschriebene Flügel 25 ist einlagig ausgebildet, d. h. zwischen den Schulterrippen 1, Armrippen 2 und Handrippen 3 ist eine einzige Schicht des Tuchs bzw. der Folie gespannt um die Tragflächensegmente (Rückentragfläche 8, Oberarmtragfläche 13, Unterarmtragfläche 18) zu bilden. Gemäß einer ersten Weiterbildung der Erfindung kann der Flügel 25' auch zweilagig ausgebildet sein, d. h. die Tragflächensegmente (Rückentragfläche 8, Oberarmtragfläche 13, Unterarmtragfläche 18) sind aus zwei vertikal voneinander beabstandeten Schichten bzw. Lagen des Tuchs/Folie, die jeweils an den Rippen (Schulterrippen 1, Armrippen 2 und Handrippen 3) befestigt sind, gebildet. Vorzugsweise ist die obere Schicht, welche die Oberseite des Flügels 25' bildet, (erstes Tuch bzw. Folie) an der Oberseite der Rippen 1, 2, 3 befestigt und die untere Schicht, welche die Unterseite des Flügels 25' bildet, (zweites Tuch bzw. Folie) an der Unterseite der Rippen befestigt. Die Oberseite und Unterseite des Flügels 25' schließen somit ein Volumen miteinander ein, das durch die Schulterrippen 1, Armrippen 2 und Handrippen 3 in Kammern unterteilt ist. Die Schulterrippen 1, Armrippen 2 und Handrippen 3 dienen dabei als distanzgebende Elemente zwischen der Oberseite und Unterseite des Flügels 25' und verleihen dem Flügel seine aerodynamische Profilform. Vorzugsweise weisen zumindest die Schulterrippen 1 und Armrippen 2 Ausnehmungen bzw. Löcher auf, um ein Strömen von Luft in angrenzende Kammern zu erlauben. Optional sind Distanzgebende Elemente zwischen dem oberen und unteren Tragflächentuch (oder der Folien) so geformt und angeordnet, dass die Profilform der angrenzenden Rippen übernommen wird.

An der Vorderseite bzw. in Nähe der Arme 32 des Benutzers sind vorzugsweise Lufteinlassöffnungen 20 vorgesehen.

Bei diesem zweilagigen Flügel gemäß der ersten Weiterbildung können die Rückentragfläche 8, die Oberarmtragflächen 13 und die Unterarmtragflächen 18 alternativ oder zusätzlich zu den unten beschriebenen Mitteln bzw. Verfahren durch Luftüberdruck in den Kammern gespannt werden. Der Luftüberdruck wird dabei durch die bei Bewegung des Benutzers durch die Lufteinlassöffnungen 20 in die Kammern einströmende Luft erzeugt. Insbesondere bei einem Flügel gemäß der ersten Weiterbildung können die Schulterrippen 1, Armrippen 2 und Handrippen 3 auch als flexible Rippen ausgebildet sein, die beispielsweise aus demselben Material wie das Tuch bzw. die Folie der Tragflächen gefertigt sind.

Um den Auftrieb des Flügels zu verstärken, ist gemäß einer zweiten Weiterbildung der Erfindung oberhalb der aus Rückentragfläche 8, Oberarmtragflächen 13 und Unterarmtragflächen 18 gebildeten Haupttragfläche eine zweite Tragfläche 21 vorgesehen (s. Fig. 3). Diese zweite Tragfläche 21 ist vorzugsweise flexibel und so mit der Haupttragfläche verbunden, dass zwischen der Haupttragfläche und der zweiten Tragfläche 21 Luftkammern 21' gebildet sind. Diese können beispielsweise mit den oben beschriebenen Lufteinlassöffnungen 20 der Haupttragfläche in Verbindung stehen und/oder separate Lufteinlassöffnungen aufweisen. Der Flügel 25' gemäß der zweiten Weiterbildung ist somit analog zu einem Doppeldecker ausgebildet. Entsprechend können noch eine oder mehrere weitere Tragflächen oberhalb der zweiten Tragfläche vorgesehen sein, die analog zu der zweiten Tragfläche ausgebildet bzw. mit der darunterliegenden Tragfläche verbunden sind (3-Decker und Mehrfach-Decker).

Gemäß einer dritten in Fig. 3 gezeigten Weiterbildung der Erfindung sind die Enden des Flügels 25' nach oben gebogen (analog zu "Winglets" bei einer Flugzeugtragfläche).

Dabei kann eine oder mehrere der oben in Bezug auf Fig. 3 beschriebenen drei Weiterbildungen zur Weiterbildung des oben beschriebenen Flügels genutzt werden.

Die Fingertragflächen 19 des Flügels 25, 25' sind einlagig aus einem Tuch bzw. einer Folie gebildet. Alternativ dazu können sie auch aus einzelnen Federn gebildet sein, die anstelle der oben beschriebenen Fingerrippen 4 an den Fingern 39 befestigt sind und durch die Finger 39 gesteuert werden können. Der Flügel 25, 25' kann auch ohne Fingertragflächen 19 ausgebildet sein.

Zudem kann der oben beschriebenen Flügel 25, 25' ohne Armrippen 2 ausgebildet sein. Anstelle der Oberarm- und Unterarmtragflächen 13, 18 weist der Flügel dann lediglich zwei Armtragflächen auf, die jeweils zwischen einer Schulterrippe und einer Handrippe gebildet sind (in den Figuren nicht gezeigt).

### Bereitstellung und Steuerung

Zur Inbetriebnahme des Flügels 25, 25' wird wie folgt vorgegangen: Zuerst werden die Oberarme 34 und Unterarme 36 des Benutzers 30 in die jeweiligen Oberarmhalbschalen 22 und Unterarmhalbschalen 23 eingebracht und mittels den Verschlussmitteln 24 an diesen befestigt.

Die Hände 38 werden an den Handrippen 3 befestigt und die Finger 39 an den Fingerrippen 4, beispielsweise mittels den nicht gezeigten Handaufnahmemitteln (Handschuhe).

Dann setzt sich der Benutzer 30 in Bewegung, beispielsweise indem er mithilfe der Skier 31 einen schneebedeckten Berghang hinab fährt. Dabei umströmt der Fahrtwind den Flügel 25, 25' in Überströmungsrichtung entgegen der Fahrtrichtung und erzeugt somit eine Auftriebskraft, die auf den Flügel 25, 25' und somit auch auf den mit dem Flügel 25, 25' verbundenen Benutzer 30 wirkt.

Zum Spannen der Tragflächen vor und/oder während der Bewegung des Benutzers 30 wird wie folgt vorgegangen: Die Rückentragfläche 8 wird gespannt durch Bewegen der Oberarme 34 nach vorne, insbesondere in Verbindung mit den festen Verbindungen zwischen den Schulterrippen 1 und den Oberarmhalbschalen 22 (in Fig. 1 schematisch durch Dreiecke 6 dargestellt). Alternativ oder zusätzlich wird die Rückentragfläche 8 gespannt durch das in den Figuren nicht gezeigte, oben erwähnte feste Verbindungselement, z. B. ein Carbon-Röhrchen, das an der Hinterkante 41 des Flügels 25, 25' zwischen den Schulterrippen 1 vorgesehen ist. Alternativ oder zusätzlich wird die Rückentragfläche 8 gespannt durch die Verbindungsleinen 12, die die Schulterrippen 1 im Bereich der Hinterkante 41 mit den Armrippen 2 nahe des Arms 32 verbinden.

Die Oberarmtragflächen 13 werden gespannt durch Beugen des Ellbogens 35, insbesondere in Verbindung mit den festen Verbindungen zwischen den Armrippen 2 und den Unterarmhalbschalen 23 (in Fig.1 schematisch durch Dreiecke 7 dargestellt). Alternativ oder zusätzlich werden die Oberarmtragflächen 13 gespannt durch die oben erwähnten festen Verbindungselemente, z. B. Carbon-Röhrchen, die jeweils an der Hinterkante 41 des Flügels 25, 25' zwischen Schulterrippe 1 und Armrippe 2 vorgesehen sind. Alternativ oder zusätzlich werden die Oberarmtragflächen 13 gespannt durch die Verbindungsleinen 14, die die Armrippen 2 im Bereich der Hinterkante 41 mit den Handrippen 3 nahe der Hand 38 verbinden.

Die Unterarmtragflächen 18 werden gespannt durch Drehen der Hände nach vorne. Alternativ oder zusätzlich werden die Unterarmtragflächen 18 gespannt durch die in den Figuren nicht gezeigten, oben erwähnten festen Verbindungselemente, z. B. Carbon-Röhrchen, die jeweils an der Hinterkante 41 des Flügels 25, 25' zwischen Armrippe 2 und Handrippe 3 vorgesehen sind. Die Fingertragflächen 19 werden gespannt durch den (vorgegebenen bzw. festen) Winkel zwischen den Unterarmverlängerungen 5 und den Handrippen 3.

Die Anstellwinkel der Tragflächen können wie folgt eingestellt bzw. gesteuert werden: Der Anstellwinkel der Rückentragfläche 8 wird durch die Neigung des Oberkörpers (Vorlage) des Benutzers 30 gesteuert. Die Feinsteuerung kann zusätzlich durch Heben und/oder Senken der Schultern 33 (mittels den Schultergelenken) erfolgen. Der Anstellwinkel der Schulterrippen 1 wird ebenfalls durch die Neigung des Oberkörpers (Vorlage) des Benutzers 30 gesteuert und wird durch die Verbindungsleinen 11 festgelegt, die vorzugsweise längenverstellbar ausgebildet sind, sodass der Anstellwinkel unterschiedlich eingestellt werden kann.

Der Anstellwinkel der Oberarmtragflächen 13 wird gesteuert durch die Schulterrippen 1 und die Armrippen 2. Der durch Neigung des Oberkörpers (Vorlage) gesteuerte Anstellwinkel der Schulterrippen 1 wird über die torsionsstabilen Oberarmhalbschalen 22, flexible Verbindung 15 (Ellenbogenverbindung) und Unterarmhalbschalen 23 auf die Armrippen 2 übertragen. Zusätzliche kann der Anstellwinkel der Armrippen 2 über die Ebene gesteuert werden, die durch die leicht angewinkelten Arme gebildet wird. Durch Absenken der Ellenbogen 35 kann der Anstellwinkel der Armrippen 2 und damit der Oberarmtragflächen 13 und Unterarmtragflächen 18 erhöht werden.

Der Anstellwinkel der Unterarmtragflächen 18 wird durch die Armrippen 2 und die Handrippen 3 gesteuert. Der Anstellwinkel der Handrippen 3 wird erhöht durch Drehen der Handkanten nach unten.

Der Anstellwinkel der Fingertragflächen 19 wird gesteuert durch die Unterarmverlängerungen 5 und die Handrippen 3. Die Feinsteuerung erfolgt durch die Fingerrippen 4 durch Beugen der Finger.

Die V-Form und Pfeilform der Unterarmverlängerungen 5 werden durch die Haltung der Unterarme gesteuert.

Bei der oben beschriebenen Ausführungsform der Erfindung wird die Bewegung (Vortrieb) des Benutzers durch Hinunterfahren eines schneebedeckten Berghangs mit Skiern 31 bewirkt. Alternativ kann die (Vorwärts-) Bewegung des Benutzers auch auf andere Art und Weise bewirkt werden, beispielsweise durch Snowboardfahren, Wasserskifahren, Hinunterrennen von Hängen, insbesondere bei Gegenwind, oder in einem Windkanal etc.

## Patentansprüche

1. Faltbares Gleitsportgerät, das vorzugsweise mit Oberkörper und/oder Armen und/oder Händen und/oder Fingern steuerbar ist, das sich in einer bestimmungsgemäßen Überströmungsrichtung von einer Vorderkante (40) zu einer Hinterkante (41) erstreckt wenn es an einem Benutzer (30) befestigt ist, und wobei das Gleitsportgerät (25, 25') zumindest umfasst:
- zwei Schulterrippen (1), die sich im Wesentlichen von der Vorderkante (40) zur Hinterkante (41) erstrecken und wobei jede der Schulterrippen (1) fest mit einem Oberarm (34) des Benutzers (30) verbindbar ist, jedoch um die Achse des Oberarms drehbar ist,
- zwei Armrippen (2), die sich im Wesentlichen von der Vorderkante (40) zur Hinterkante (41) erstrecken und wobei jede der Armrippen (2) fest mit einem Unterarm (36) des Benutzers (30) verbindbar ist;
- zwei Handrippen (3), die sich im Wesentlichen von der Vorderkante (40) zur Hinterkante (41) erstrecken und wobei jede der Handrippen (3) fest mit einer Hand (38) des Benutzers (30) verbindbar ist,
- eine Rückentragfläche (8), die zwischen den zwei Schulterrippen (1) gebildet ist und
- zwei Armtragflächen, die jeweils zwischen einer Schulterrippe (1) und einer Handrippe (3) gebildet sind, wobei jede der zwei Armtragflächen in eine Oberarmtragfläche (13), die zwischen der jeweiligen Schulterrippe (1) und Armrippe (2) gebildet ist, und in eine Unterarmtragfläche (18), die zwischen der jeweiligen Armrippe (2) und Handrippe (3) gebildet ist, unterteilt ist;
**dadurch gekennzeichnet, dass**
- das Gleitsportgerät ein Aufnahmeelement (15, 22, 23) zum zumindest teilweisen Aufnehmen eines Arms (32) des Benutzers (30) umfasst, wobei die Schulterrippe (1) und die Armrippe (2) fest an dem Aufnahmeelement befestigt sind, wobei das Aufnahmeelement aus einem Oberarmaufnahmeelement (22) zur Aufnahme des Oberarms (34) und einem Unterarmaufnahmeelement (23) zur Aufnahme des Unterarms (36) gebildet ist, die mittels einer flexiblen Verbindung (15) miteinander verbunden sind und zusammen ein torsionsstabiles Aufnahmeelement bilden und wobei die Schulterrippe an dem Oberarmaufnahmeelement vorgesehen ist und die Armrippe an dem Unterarmaufnahmeelement.

2. Gleitsportgerät nach Anspruch 1, weiter umfassend zwei Unterarmverlängerungen (5, 5'), die jeweils fest mit dem Unterarmaufnahmeelement (23) verbindbar sind und sich im Wesentlichen in Verlängerung des Unterarms (36) erstrecken und wobei zumindest jeweils eine Fingertragfläche (19) zwischen einer Unterarmverlängerung (5, 5') und der jeweiligen Handrippe (3) gebildet ist, weiter umfassend zumindest eine Fingerrippe (4), die jeweils fest mit einem Finger (39) des Benutzers (30) verbindbar ist und sich im Wesentlichen in Verlängerung des jeweiligen Fingers (39) erstreckt und wobei zwischen der jeweiligen Unterarmverlängerung (5, 5'), der Handrippe (3) und der zumindest einen Fingerrippe (4) eine Mehrzahl von Fingertragflächen (19) gebildet ist.

3. Gleitsportgerät nach Anspruch 2, wobei zumindest eine Unterarmverlängerung (5, 5') zweiteilig ausgebildet ist, wobei ein erster Abschnitt der Unterarmverlängerung fest mit dem Unterarm (36) verbindbar ist und ein zweiter Abschnitt der Unterarmverlängerung in Bezug auf den ersten Abschnitt so bewegbar ist, dass der zweite Abschnitt und die Fingerrippen (4) bzw. Fingertragflächen (19) in Richtung der Handrippe (3) des Benutzers klappbar sind.

4. Gleitsportgerät nach Anspruch 2 oder 3, wobei die Unterarmverlängerungen (5') an ihren den Armen (32) abgewandten Enden nach oben gebogene Abschnitte aufweisen.

5. Gleitsportgerät nach einem der Ansprüche 1 bis 4, weiter umfassend Rückenverbindungsmittel (9, 10, 11), die dazu ausgebildet sind, die Rückentragfläche (8) und/oder Schulterrippe (1), in einem Bereich nahe der Hinterkante (41) der Rückentragfläche bzw. Schulterrippe, mit dem Rücken (42) des Benutzers zu verbinden und wobei die Rückenverbindungsmittel (9, 10, 11) längenverstellbar ausgebildet sind.

6. Gleitsportgerät nach einem der Ansprüche 1 bis 5, wobei an der Hinterkante (41) zumindest zwischen zwei der Rippen (1, 2, 3, 4, 5, 5') ein festes Element vorgesehen ist.

7. Gleitsportgerät nach einem der Ansprüche 1 bis 6, weiter umfassend Schulterrippenverbindungsmittel (12), die zumindest eine Schulterrippe (1) im Bereich der Hinterkante (41) mit einer Armrippe (2) nahe des Arms (32) des Benutzers (30) verbinden und/oder umfassend Armrippenverbindungsmittel (14), die zumindest eine Armrippe (2) im Bereich der Hinterkante (41) mit einer Handrippe (3) nahe der Hand (38) des Benutzers (30) verbinden.

8. Gleitsportgerät nach einem der Ansprüche 1 bis 7, umfassend weiter zumindest ein Sicherheitsgelenk (16) an einer Schulterrippe (1) und/oder einer Armrippe (2) und/oder einer Handrippe (3) und/oder einer Unterarmverlängerung (5, 5') und/oder einer Fingerrippe (4), wobei das Sicherheitsgelenk (16) dazu ausgebildet ist, bei Überlastung des jeweiligen Elements auszulösen.

9. Gleitsportgerät nach einem der Ansprüche 1 bis 8, weiter umfassend Handaufnahmemittel zur Aufnahme der Hände (38) des Benutzers (30), wobei die Handrippen (3) fest an den Handaufnahmemitteln befestigt sind.

10. Gleitsportgerät nach einem der Ansprüche 1 bis 9, wobei die Schulterrippen (1) und/oder die Armrippen (2) und/oder die Handrippen (3) in vertikaler Richtung steif und in horizontaler Richtung flexibel sind.

11. Gleitsportgerät nach einem der Ansprüche 1 bis 10, wobei die Rückentragfläche (8) und die Armtragflächen bzw. die Oberarmtragflächen (13) und Unterarmtragflächen (18) jeweils eine Oberseite und eine von der Oberseite beabstandete Unterseite aufweisen, wobei die jeweiligen Rippen (1, 2, 3) als distanzgebende Elemente zwischen der Oberseite und der Unterseite wirkenund/oderwobei das Gleitsportgerät vorzugsweise weiter Lufteinlassöffnungen (20) umfasst zum Einlassen von Luft in den zwischen der Oberseite und der Unterseite gebildeten Zwischenraum.

12. Gleitsportgerät nach Anspruch 11, wobei die Schulterrippen (1), die Armrippen (2) und/oder die Handrippen (3) jeweils aus einem flexiblen Material gebildet sind.

13. Gleitsportgerät nach einem der Ansprüche 1 bis 12, wobei oberhalb der aus Rückentragfläche (8) und Armtragflächen bzw. Oberarmtragflächen (13) und Unterarmtragflächen (18) gebildeten Haupttragfläche zumindest eine weitere, vorzugsweise flexible, Tragfläche (21) vorgesehen ist, die mit der Haupttragfläche verbunden ist, vorzugsweise so, dass zwischen der Haupttragfläche und der weiteren Tragfläche (21) sich im Wesentlichen in der bestimmungsgemäßen Überströmungsrichtung erstreckende Luftkammern gebildet sind.

## Claims

1. Foldable gliding sports apparatus, wherein the foldable gliding sports apparatus is preferably controllable by upper body and/or arms and/or hands and/or fingers, which gliding sports apparatus extends from a leading edge (40) to a trailing edge (41) in an intended direction of overflow when it is fastened to a user (30), and wherein the gliding sports apparatus (25, 25') at least comprises:
- two shoulder ribs (1) which extend substantially from the leading edge (40) to the trailing edge (41), and wherein each of the shoulder ribs (1) is connectable fixedly to an upper arm (34) of the user (30) but is rotatable about the axis of the upper arm,
- two arm ribs which extend substantially from the leading edge (40) to the trailing edge (41), and wherein each of the arm ribs (2) is fixedly connectable to a lower arm (36) of the user (30);
- two hand ribs (3) which extend substantially from the leading edge (40) to the trailing edge (41), and wherein each of the hand ribs (3) is connectable fixedly to a hand (38) of the user (30),
- a back airfoil (8) which is formed between the two shoulder ribs (1), and
- two arm airfoils, which are formed in each case between a shoulder rib (1) and a hand rib (3). wherein each of the two arm airfoils is divided into an upper-arm airfoil (13), which is formed between the respective shoulder rib (1) and arm rib (2), and a lower-arm airfoil (18), which is formed between the respective arm rib (2) and hand rib (3);
**characterized in that**
- the gliding sports apparatus comprises a receiving element (15, 22, 23) for at least partially receiving an arm (32) of the user (30), wherein the shoulder rib (1) and the arm rib (2) are fastened fixedly to the receiving element, wherein the receiving element is formed from an upper-arm receiving element (22) for receiving the upper arm (34) and a lower-arm receiving element (23) for receiving the lower arm (36), which are connected to one another by way of a flexible connection and which, together, form a torsionally stable receiving element, and wherein the shoulder rib is provided on the upper-arm receiving element and the arm rib is provided on the lower-arm receiving element.

2. Gliding sports apparatus according to Claim 1, furthermore comprising two lower-arm elongations (5, 5') which are in each case connectable fixedly to the lower-arm receiving element and which extend substantially as an elongation of the lower arm (36), and wherein at least in each case one finger airfoil (19) is formed between a lower-arm elongation (5, 5') and the respective hand rib (3), furthermore comprising at least one finger ribs (4), which is in each case connectable fixedly to a finger (39) of the user (30) and extends substantially as an elongation of the respective finger (39), and wherein a multiplicity of finger airfoils (19) is formed between the respective lower-arm elongation (5, 5'), the hand rib (3) and the at least one finger rib (4).

3. Gliding sports apparatus according to Claim 2, wherein at least one lower-arm elongation (5, 5') is formed in two parts, wherein a first portion of the lower-arm elongation is connectable fixedly to the lower arm (36), and a second portion of the lower-arm elongation is movable relative to the first portion such that the second portion and the finger ribs (4) or finger airfoils (19) are pivotable in the direction of the hand rib (3) of the user.

4. Gliding sports apparatus according to Claim 2 or 3, wherein the lower-arm elongations (5') have upwardly curved portions (winglets) at their ends averted from the arms (32).

5. Gliding sports apparatus according to any of Claims 1 to 4, furthermore comprising back connection means (9, 10, 11) which are designed for connecting the back airfoil (8) and/or shoulder rib (1), in a region close to the trailing edge (41) of the back airfoil or shoulder rib, to the back (42) of the user and wherein the back connection means (9, 10, 11) are designed to be adjustable in length.

6. Gliding sports apparatus according to any of Claims 1 to 5, wherein a fixed element is provided at the trailing edge (41) at least between two of the ribs (1, 2, 3, 4, 5, 5').

7. Gliding sports apparatus according to any of Claims 1 to 6, furthermore comprising shoulder rib connection means (12) which connect at least one shoulder rib (1) in the region of the trailing edge (41) to an arm rib (2) close to the arm (32) of the user (30), and/or comprising arm rib connection means (14) which connect at least one arm rib (2) in the region of the trailing edge (41) to a hand rib (3) close to the hand (38) of the user (30).

8. Gliding sports apparatus according to any of Claims 1 to 7, furthermore comprising at least one safety joint (16) at a shoulder rib (1) and/or an arm rib (2) and/or a hand rib (3) and/or a lower-arm elongation (5, 5') and/or a finger rib (4), wherein the safety joint (16) is designed to detach in the event of overloading of the respective element.

9. Gliding sports apparatus according to any of Claims 1 to 8, furthermore comprising hand-receiving means for receiving the hands (38) of the user (30), wherein the hand ribs (3) are fastened fixedly to the hand-receiving means.

10. Gliding sports apparatus according to any of Claims 1 to 9, wherein the shoulder ribs (1) and/or the arm ribs (2) and/or the hand ribs (3) are rigid in a vertical direction and flexible in a horizontal direction.

11. Gliding sports apparatus according to any of Claims 1 to 10, wherein the back airfoil (8) and the arm airfoils or the upper-arm airfoils (13) and lower-arm airfoils (18) each have a top side and a bottom side spaced apart from the top side, wherein the respective ribs (1, 2, 3) preferably act as distancing elements between the top side and the bottom side, and/or wherein the gliding sports apparatus preferably furthermore comprises air inlet openings (20) for admitting air into the intermediate space formed between the top side and the bottom side.

12. Gliding sports apparatus according to Claim 11, wherein the shoulder ribs (1), the arm ribs (2) and/or the hand ribs (3) are each formed from a flexible material.

13. Gliding sports apparatus according to any of Claims 1 to 12, wherein, above the main airfoil formed from back airfoil (8) and arm airfoils or upper-arm airfoils (13) and lower-arm airfoils (18), there is provided at least one further, preferably flexible airfoil (21) which is connected to the main airfoil, preferably such that, between the main airfoil and the further airfoil (21), there are formed air chambers which extend substantially in the intended direction of overflow.

## Revendications

1. Appareil de sport de glisse repliable, lequel est commandable de préférence à l'aide de la partie supérieure du corps et/ou des bras et/ou des mains et/ou des doigts, et lequel s'étend d'un bord d'attaque (40) à un bord de fuite (41) dans une direction d'écoulement prévue lorsqu'il est fixé à un utilisateur (30), et l'appareil de sport de glisse (25, 25') comportant au moins :
- deux nervures d'épaule (1), qui s'étendent sensiblement du bord d'attaque (40) au bord de fuite (41), et chacune des nervures d'épaule (1) pouvant être reliée solidement à un haut du bras (34) de l'utilisateur (30), mais pouvant tourner autour de l'axe du haut du bras,
- deux nervures de bras (2), qui s'étendent sensiblement du bord d'attaque (40) au bord de fuite (41), et chacune des nervures de bras (2) pouvant être reliée solidement à un avant-bras (36) de l'utilisateur (30) ;
- deux nervures de main (3), qui s'étendent sensiblement du bord d'attaque (40) au bord de fuite (41), et chacune des nervures de main (3) pouvant être reliée solidement à une main (38) de l'utilisateur (30),
- une surface portante de dos (8), qui est formée entre les deux nervures d'épaule (1) et
- deux surfaces portantes de bras qui sont formées respectivement entre une nervure d'épaule (1) et une nervure de main (3), chacune des deux surfaces portantes de bras étant divisée en une surface portante de haut du bras (13), qui est formée entre la nervure d'épaule (1) respective et la nervure de bras (2), et une surface portante d'avant-bras (18), qui est formée entre la nervure de bras (2) respective et la nervure de main (3) ;
**caractérisé en ce que**
- l'appareil de sport de glisse comporte un élément de réception (15, 22, 23) servant à la réception au moins partielle d'un bras (32) de l'utilisateur (30), la nervure d'épaule (1) et la nervure de bras (2) étant fixées solidement à l'élément de réception, l'élément de réception étant formé à partir d'un élément de réception de haut du bras (22) servant à la réception du haut du bras (34) et d'un élément de réception d'avant-bras (23) servant à la réception de l'avant-bras (36), lesquels sont reliés l'un à l'autre au moyen d'une liaison flexible (15) et forment conjointement un élément de réception stable en torsion, et la nervure d'épaule étant prévue sur l'élément de réception de haut du bras et la nervure de bras étant prévue sur l'élément de réception d'avant-bras.

2. Appareil de sport de glisse selon la revendication 1, comportant en outre deux prolongements d'avant-bras (5, 5'), qui peuvent être reliés respectivement fixement à l'élément de réception d'avant-bras (23) et s'étendent sensiblement dans le prolongement de l'avant-bras (36), et au moins respectivement une surface portante de doigt (19) étant formée entre un prolongement d'avant-bras (5, 5') et la nervure de main (3) respective, en outre comportant au moins une nervure de doigt (4), qui peut être reliée respectivement fixement à un doigt (39) de l'utilisateur (30) et s'étend sensiblement dans le prolongement du doigt (39) respectif, et une pluralité de surfaces portantes de doigt (19) étant formée entre le prolongement d'avant-bras (5, 5') respectif, la nervure de main (3) et l'au moins une nervure de doigt (4) .

3. Appareil de sport de glisse selon la revendication 2, au moins un prolongement d'avant-bras (5, 5') étant réalisé en deux parties, une première partie du prolongement d'avant-bras pouvant être reliée solidement à l'avant-bras (36) et une deuxième partie du prolongement d'avant-bras étant déplaçable par rapport à la première partie, de telle sorte que la deuxième partie et les nervures de doigt (4) ou les surfaces portantes de doigt (19) puissent être rabattues en direction de la nervure de main (3) de l'utilisateur.

4. Appareil de sport de glisse selon la revendication 2 ou 3, les prolongements d'avant-bras (5') comprenant, à leurs extrémités opposées aux bras (32), des parties courbées vers le haut.

5. Appareil de sport de glisse selon l'une des revendications 1 à 4, comportant en outre des moyens de liaison au dos (9, 10, 11), qui sont réalisés pour relier la surface portante de dos (8) et/ou la nervure d'épaule (1), dans une région proche du bord de fuite (41) de la surface portante de dos ou de la nervure d'épaule, au dos (42) de l'utilisateur, et les moyens de liaison au dos (9, 10, 11) étant réalisés de manière réglable en longueur.

6. Appareil de sport de glisse selon l'une des revendications 1 à 5, un élément fixe étant prévu au niveau du bord de fuite (41) au moins entre deux des nervures (1, 2, 3, 4, 5, 5').

7. Appareil de sport de glisse selon l'une des revendications 1 à 6, comportant en outre des moyens de liaison de nervure d'épaule (12), qui relient au moins une nervure d'épaule (1) dans la région du bord de fuite (41) à une nervure de bras (2) près du bras (32) de l'utilisateur (30) et/ou comportant des moyens de liaison de nervure de bras (14), qui relient au moins une nervure de bras (2) dans la région du bord de fuite (41) à une nervure de main (3) près de la main (38) de l'utilisateur (30) .

8. Appareil de sport de glisse selon l'une des revendications 1 à 7, comportant en outre au moins une articulation de sécurité (16) au niveau d'une nervure d'épaule (1) et/ou d'une nervure de bras (2) et/ou d'une nervure de main (3) et/ou d'un prolongement d'avant-bras (5, 5') et/ou d'une nervure de doigt (4), l'articulation de sécurité (16) étant réalisée pour se détacher en cas de surcharge de l'élément respectif.

9. Appareil de sport de glisse selon l'une des revendications 1 à 8, comportant en outre des moyens de réception de main servant à la réception des mains (38) de l'utilisateur (30), les nervures de main (3) étant fixées solidement aux moyens de réception de main.

10. Appareil de sport de glisse selon l'une des revendications 1 à 9, les nervures d'épaule (1) et/ou les nervures de bras (2) et/ou les nervures de main (3) étant rigides dans la direction verticale et flexibles dans la direction horizontale.

11. Appareil de sport de glisse selon l'une des revendications 1 à 10, la surface portante de dos (8) et les surfaces portantes de bras ou les surfaces portantes de haut du bras (13) et les surfaces portantes d'avant-bras (18) comprenant respectivement un côté supérieur et un côté inférieur espacé du côté supérieur, les nervures (1, 2, 3) respectives agissant comme des éléments d'espacement entre le côté supérieur et le côté inférieur et/ou l'appareil de sport de glisse comportant de préférence en outre des ouvertures d'admission d'air (20) pour l'admission d'air dans l'espace intérieur formé entre le côté supérieur et le côté inférieur.

12. Appareil de sport de glisse selon la revendication 11, les nervures d'épaule (1), les nervures de bras (2) et/ou les nervures de main (3) étant formées respectivement à partir d'un matériau flexible.

13. Appareil de sport de glisse selon l'une des revendications 1 à 12, dans lequel, au-dessus de la surface portante principale formée à partir de la surface portante de dos (8) et des surfaces portantes de bras ou des surfaces portantes de haut du bras (13) et des surfaces portantes d'avant-bras (18), au moins une autre surface portante (21) de préférence flexible est prévue, laquelle est reliée à la surface portante principale, de préférence de telle sorte que des chambres à air s'étendant sensiblement dans la direction d'écoulement prévue soient formées entre la surface portante principale et l'autre surface portante (21).
